# EUROPÄISCHE PATENTSCHRIFT

(11) **EP 3 446 012 B1**
(45) Veröffentlichungstag und Bekanntmachung des Hinweises auf die Patenterteilung: **06.05.2020**
(21) Anmeldenummer: 17707182.6
(22) Anmeldetag: 03.02.2017
(51) Int. Cl.: F16K 27/02, F16K 27/00, F16K 31/06

(54) **PNEUMATISCHE MEHRVENTILVORRICHTUNG SOWIE HERSTELLVERFAHREN**
PNEUMATIC MULTI-VALVE DEVICE AND PRODUCTION METHOD
DISPOSITIF PNEUMATIQUE À PLUSIEURS SOUPAPES ET PROCÉDÉ DE FABRICATION

(30) Priorität: 18.04.2016 DE 102016107161
(43) Veröffentlichungstag der Anmeldung: 27.02.2019
(73) Patentinhaber: Eto Magnetic GmbH, 78333 Stockach (DE)
(72) Erfinder: BUNIO, Mariusz, 55-040 Zerniki Male (PL); BRUCZUK, Witold, 51-523 Wroclaw (PL); ZINSER, Michael, 78359 Orsingen-Nenzingen (DE)
(74) Vertreter: Patentanwälte Behrmann Wagner PartG mbB
(86) Internationale Anmeldenummer: PCT/EP2017/052382
(87) Internationale Veröffentlichungsnummer: WO 2017/182150

(56) Entgegenhaltungen:
- DE-A1-102013 113 673
- US-A1- 2013 318 954
- US-B1- 8 267 375

## Beschreibung

Die Erfindung betrifft eine pneumatische Mehrventilvorrichtung (Ventilblock) gemäß dem Oberbegriff des Anspruchs 1, insbesondere zum Einsatz in elektronisch geregelten Luftfedersystemen von Fahrzeugen, bevorzugt Nutzfahrzeugen, umfassend ein Gehäuse mit mehreren elektromagnetischen Ventilaktuatoren, jeweils aufweisend stationär in dem Gehäuse angeordnete Spulenmittel, einen in dem Gehäuse angeordneten Kern sowie als Reaktion auf eine Bestromung der Spulenmittel in dem Gehäuse relativ zu dem Kern und einem (jeweiligen) Pneumatikanschluss des Gehäuses entlang einer Verstellachse verstellbare Ankermittel, wobei die Verstellachse der Ankermittel der (mehreren) Ventilaktuatoren parallel ausgerichtet sind und die den Ankermitteln zugeordneten Pneumatikanschlüsse nebeneinander an einer Anschlussgehäuseseite (des Gehäuses) angeordnet sind, die entlang der Verstellachsen von einer davon abgewandten Gehäuserückseite beabstandet ist, wobei die Kerne jeweils eine Entlüftungsbohrung aufweisen, die luftleitend mit einem Entlüftungssammelkanal auf der von der Anschlussgehäuseseite abgewandten Seite der Kerne verbunden sind, der luftleitend mit einer Entlüftungsöffnung des Gehäuses verbunden ist, die auf einer von der Gehäuserückseite unterschiedlichen Gehäuseseite, insbesondere auf der die Pneumatikanschlüsse aufweisenden Anschlussgehäuseseite angeordnet ist.

Aus der DE 10 2013 113 673 A1 wird eine entsprechende Mehrventilvorrichtung bekannt.

Ferner betrifft die Erfindung en Verfahren zum Herstellen einer solchen Mehrventilanordnung gemäß Anspruch 13.

Bekannte Mehrventilvorrichtungen (Ventilblöcke) werden im Rahmen von elektronisch geregelten Luftfedersystemen für Nutzfahrzeuge eingesetzt. Bei den bekannten Mehrventilanordnungen wirken die Ankermittel der unterschiedlichen Ventilaktuatoren mit einem jeweiligen außerhalb des Gehäuses in einer mit dem Gehäuse verbundenen Verteilerplatte angeordneten Ventilsitz zusammen, um die Verbindung von einer Druckluftleitung zu einer Arbeitsleitung im Rahmen der Luftfederungsanwendung zu öffnen und zu schließen. Die einzelnen Ventile bzw. Ventilaktuatoren werden entlüftet über in den Ankermitteln vorgesehene Entlüftungsbohrungen, die auf einer mit der Verteilerplatte verbundenen Pneumatikanschlussseite (Anschlussgehäuseseite) des Gehäuses abgewandten Gehäuserückseite in einen Sammelraum bzw. Sammelkanal münden, der von einem mit dem Gehäuse verschraubten Deckel begrenzt ist, der zur Ausbildung des Sammelkanals entsprechend dreidimensional geprägt ist.

Aus dem Sammelkanal strömt die Entlüftungsluft über einen gehäuseseitigen Entlüftungskanal parallel zu den Verstellachsen der Aktuatormittel zu einer Entlüftungsöffnung auf der Anschlussgehäuseseite. Die Führung der Anker-mittel erfolgt in Ankerführungsrohren, die im Spulenträger der Spulenmittel der Ventilaktuatoren aufgenommen sind.

Als nachteilig bei den bekannten Mehrventilvorrichtungen wird der aufwändige Fertigungsprozess empfunden, da das Gehäuse in einem zweistufigen Umspritzungsprozess hergestellt werden muss. Dies ist darauf zurückzuführen, dass zunächst die Spulenträger zusammen mit einer Drahtgitteranordnung zur elektrischen Kontaktierung der Spulenmittel umspritzt werden und die so hergestellte Einheit aus verschiedenen Spulenmitteln in einem gemeinsamen Trägerjoch aufgenommen wird, welches die verschiedenen Spulenmittel umklammert, worauf dann Trägerjoch und bereits umspritzte Spulenmittel bzw. Spulenmitteleinheit nochmals umspritzt werden bzw. wird. Das so hergestellte Gehäuse wird dann rückseitig mit dem Deckel zur Ausbildung des Entlüftungssammelkanals bzw. - raums verschraubt und auf der Pneumatikanschlussseite mit der Verteilerplatte verbunden. Zudem ist die benötigte Kupfermenge zur Ausbildung der Spulenmittel relativ hoch.

Ausgehend von dem vorgenannten Stand der Technik liegt der Erfindung die Aufgabe zugrunde, eine einfacher fertigbare pneumatische Mehrventilvorrichtung anzugeben, bei der bevorzugt auf einen Deckel zur Begrenzung des Entlüftungssammelkanals verzichtet werden kann. Bevorzugt soll auch die zum Einsatz kommende Kupfermenge zur Ausbildung der Spulenmittel (bei gleicher oder höherer Verstellkraft der Ankermittel) reduziert werden. Ferner besteht die Aufgabe darin, ein vereinfachtes Herstellverfahren für eine erfindungsgemäße Mehrventilvorrichtung anzugeben.

Diese Aufgabe wird hinsichtlich der pneumatischen Mehrventilvorrichtung mit den Merkmalen des Anspruchs 1 gelöst, d.h. bei einer gattungsgemäßen Mehrventilvorrichtung dadurch, dass der Entlüftungssammelkanal von mehreren luftleitend miteinander verbundenen, bevorzugt jeweils als Kunststoffspritzgussteil ausgebildeten, Entlüftungskanalelementen gebildet bzw. aus solchen zusammengesetzt ist. gebildet

Hinsichtlich des Verfahrens wird die Aufgabe mit den Merkmalen des Anspruchs 13 gelöst, d.h. bei einem gattungsgemäßen Verfahren dadurch, dass die Entlüftungsbohrungen der Kerne jeweils luftleitend mit einem, bevorzugt als Kunststoffspritzgussteil ausgebildeten, Lüftungskanalelement verbunden werden, die vor oder nach dem luftleitenden Verbinden mit den Entlüftungsbohrungen luftleitend zu einem Entlüftungssammelkanal verbunden wurden bzw. werden.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen. Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale auch als vorrichtungsgemäß offenbart gelten und beanspruchbar sein.

Der Erfindung liegt der Gedanke zugrunde, den Entlüftungssammelkanal aus mehreren Einzelkanal- bzw. Entlüftungskanalelementen modulartig zusammenzusetzen, wobei jede in einem der Kerne angeordnete Entlüftungsbohrung luftleitend mit einem der Entlüftungskanalelemente verbunden ist, bevorzugt jeweils mit einem eigenen Entlüftungskanalelement, wobei die Entlüftungskanalelemente wiederum gemeinsam den Entlüftungssammelkanal bilden, der dann, bevorzugt über einen gehäuseseitigen Entlüftungskanal zu der gehäuseseitigen Entlüftungsöffnung führt, die auf einer von der Gehäuserückseite unterschiedlichen Gehäuseseite, insbesondere der (Pneumatik-) Anschlussgehäuseseite des bevorzugt im Wesentlichen quaderförmgen Gehäuses angeordnet ist. Anders ausgedrückt wird mit Hilfe von mehreren Entlüftungskanalelementen ein Entlüftungsrohrsystem, vorzugsweise durch Ineinanderstecken der Entlüftungskanalelemente gebildet, welches die Entlüftungsbohrungen der Kerne luftleitend kontaktiert. Auf diese Weise kann auf einen im Stand der Technik notwendigen Gehäusedeckel zur Begrenzung des Entlüftungssammelkanals verzichtet werden. Insbesondere ist es zudem möglich, wie später noch erläutert werden wird, die Entlüftungskanalelemente in einem monolithischen, durch Umspritzen herzustellenden Gehäusekörper zu integrieren und somit für eine erhöhte mechanische Festigkeit Sorge zu tragen. Auch ermöglicht es der erfindungsgemäße, modulartige Entlüftungssammelkanalaufbau die verschiedenen Komponenten der Mehrventilvorrichtung mit einem einzigen Umspitzungsvorgang, insbesondere im Rahmen der Ausbildung eines einzigen monolithischen Gehäusekörpers miteinander zu verbinden, insbesondere, da die einzelnen Ventilaktuatoren über mehrere Entlüftungskanalelemente definiert relativ zueinander vorpositioniert werden können bzw. werden.

Die Entlüftungskanalelemente befinden sich bevorzugt auf einer von der Anschlussgehäuseseite abgewandten Seite der Kerne, also zwischen den Kernen und der der Anschlussgehäuseseite gegenüberliegenden bzw. von dieser abgewandten Gehäuserückseite.

Als besonders vorteilhaft hat es sich herausgestellt, wenn die einzelnen Entlüftungskanalelemente als Kunststoffspritzgussteile ausgebildet sind, die modulartig zu dem Entlüftungssammelkanal gefügt werden bzw. sind. Unabhängig von der Materialwahl bilden die Entlüftungskanalelemente jeweils einen Kanalabschnitt des gesamten Entlüftungsrohrsystems, wobei bevorzugt jedes der Entlüftungskanalelemente mindestens einen Anschlusskanalabschnitt zu dem zugehörigen Kern bzw. der zugehörigen Entlüftungsbohrung umfasst sowie mindestens einen Verbindungskanalabschnitt zum luftleitenden Verbinden mit einem anderen der Entlüftungskanalelemente.

Wie bereits angedeutet, ist es besonders bevorzugt, wenn das Gehäuse der Mehrventilanordnung einen, bevorzugt monolithischen, Kunststoffgehäusekörper aufweist, oder noch weiter bevorzugt daraus besteht, wobei der Kunststoffgehäusekörper durch Umspritzen der Entlüftungskanalelemente, bevorzugt gemeinsam mit den Spulenmitteln, mit Kunststoff gebildet ist. Bevorzugt sind auf der von der Rückseite des Gehäuses abgewandten Anschlussseite in dem Gehäuse die den Ankermitteln zugeordneten Pneumatikanschlüsse, insbesondere zum Festlegen einer bevorzugt vorgesehenen und Ventilsitze zum Zusammenwirken mit den Ankermitteln aufweisenden Ventilplatte ganz besonders bevorzugt durch Teilumspritzen fixiert.

Wie später noch im Rahmen des erfindungsgemäßen Verfahrens erläutert werden wird, ist es bevorzugt, wenn der die Entlüftungskanalelemente im Bereich der Gehäuserückseite übergreifende bzw. verdeckende Kunststoffgehäusekörper der einzige Umspritzungsgehäusekörper ist, der die Entlüftungskanalelemente in sich aufnimmt und sich jedoch zusätzlich auch in Bereiche zwischen den Spulenmitteln erstreckt, die bevorzugt jeweils von einem Jochelement umklammert sind, welches dann von dem Kunststoffmaterial des monolithischen Kunststoffgehäusekörpers umschlossen ist. Bevorzugt befindet sich an einer seitlichen Gehäusewand bzw. an einer Seite des Kunststoffgehäusekörpers, die sich winklig, bevorzugt rechtwinklig zur Anschlussseite und der Gehäuserückseite entlang der Verstellachsen erstreckt ein elektrischer Anschlussstecker oder eine elektrische Anschlussbuchse zur elektrischen Kontaktierung sämtlicher Spulenmittel. Diese elektrischen Anschlussmittel sind bevorzugt in dem, insbesondere einzigen monolithischen Kunststoffgehäusekörper durch Umspritzen festgelegt, ebenso wie die Pneumatikanschlüsse an der Anschlussgehäuseseite.

Bevorzugt verbindet der aus mehreren Entlüftungskanalelementen zusammengesetzte Entlüftungssammelkanal die Entlüftungsbohrungen nicht unmittelbar mit der Entlüftungsöffnung des Gehäuses sondern diese ist mittelbar über einen gehäuseseitigen Entlüftungskanal, der sich bevorzugt parallel zu den Verstellachsen hin zur Anschlussgehäuseseite erstreckt mit dem aus den Entlüftungskanalelementen zusammengesetzten Entlüftungssammelkanal verbunden.

Wie ebenfalls bereits angedeutet, dienen die Entlüftungskanalelemente bevorzugt einer Relativpositionierung der Kerne und damit der die Ker-ne aufnehmenden Spulenmittel vor einem Umspritzungsvorgang. Um für die notwendige mechanische Stabilität und/oder für die luftleitende Verbindung der Entlüftungskanalelemente untereinander Sorge zu tragen ist es bevorzugt, wenn die Entlüftungskanalelemente, insbesondere in der Art einer Muffenverbindung ineinander steckbar sind bzw. ineinander gesteckt sind. Zusätzlich oder alternativ können integrale bzw. monolithisch mit den Entlüftungskanalelementen ausgebildete Rastmittel zur Ausbildung einer mechanischen Rastverbindung zugeordnet sein.

Besonders zweckmäßig ist es, wenn die Entlüftungskanalelemente mechanisch durch Einstecken in eine jeweilige Kernöffnung oder durch Aufstecken auf einen jeweiligen Verbindungsfortsatz mit den Kernen mechanisch verbunden sind bzw. werden. Besonders zweckmäßig ist eine Ausführungsform eines der Entlüftungskanalelemente als Verzweigungselement, welches einen Anschlusskanalabschnitt zum Anschließen an einen der Kerne, mindestens einen Verbindungskanalabschnitt zur Anbindung an ein anderes der zu einem anderen der Kerne führenden Entlüftungskanalelement sowie einen Ableitungskanalabschnitt zur luftleitenden Verbindung mit der Entlüftungsöffnung, insbesondere an einen zu der Entlüftungsöffnung führenden gehäuseseitigen Entlüftungskanal aufweist.

Für den Fall des Vorsehens von mehr als zwei Ventilaktuatoren ist es bevorzugt, wenn das als Verbindungselement ausgebildete Entlüftungskanalelement nicht nur einen Verbindungskanalabschnitt, sondern zwei Verbindungskanalabschnitte zur Anbindung an zwei benachbarte Entlüftungskanalelemente aufweist.

Im Hinblick auf eine vereinfachte Montage ist es bevorzugt, wenn die Entlüftungskanalelemente eine gemeinsame elektrische Anschlussplatte zur elektrischen Kontaktierung der mehreren Spulenelenmittel, bevorzugt axial in Verlängerung der Verstellachsen, durchsetzen. Eine solche Anschlussplatte befindet sich bevorzugt auf der von der Anschlussgehäuseseite abgewandten Seite der Spulenmittel, wobei es besonders bevorzugt ist, wenn die Anschlussplatte auf magnetisch leitende Jochelemente der einzelnen Spulenmittel aufgesetzt wird bzw. ist.

Zur Einsparung von Kupfer für die Spulenmittel ist es bevorzugt, wenn auf Ankerführungsrohre zur Führung der Ankermittel bei ihrer Verstellbewegung entlang der jeweiligen Verstellachse verzichtet wird und die Ankermittel unmittelbar in einer zentrischen Durchgangsöffnung eines jeweiligen Spulenträgers, insbesondere ein Kunststoffspritzgussteil, geführt sind. Hierdurch wird der Abstand der Ankermittel zu den Spulenmitteln reduziert und zudem ein Materialübergang eingespart.

Bevorzugt sind die Entlüftungsbohrungen in den Kernen als axiale Durchgangskanäle ausgebildet, die geradlinig in Verlängerung der Verstellachsen verlaufen. Bevorzugt umfasst jeder Kern eine zentrische, geradlinig axial verlaufende und mit der Verstellachse fluchtende Entlüftungsbohrung.

Als besonders zweckmäßig hat es sich herausgestellt, dass die Ankermittel jeweils mit dem zugehörigen Kern eine Arbeitskammer begrenzen, die über die zugehörige Entlüftungsbohrung in den von den Entlüftungskanalelementen gebildeten Entlüftungssammelkanal entlüftbar ist.

Die Spulenträger sind bevorzugt jeweils einteilig mit einem pneumatischen Anschluss ausgebildet, der das Gehäuse, insbesondere den monolithischen Gehäusekörper auf der Anschlussgehäuseseite axial in Verlängerung der Verstellachse des Ankers durchsetzt. Zur luftleitenden Anbindung des pneumatischen Anschlussbereichs an die zugehörige Entlüftungsbohrung im Kern ist es bevorzugt, wenn ein den jeweiligen Ankermitteln zugeordneter Verbindungskanal vorgesehen ist, der den Pneumatikanschluss, insbesondere eine Arbeitsleitung luftleitend mit der zugehörigen Entlüftungsbohrung verbindet, insbesondere über eine zwischen den Ankermitteln und dem Kern ausgebildete Arbeitskammer. Vorgenannter Verbindungskanal ist bevorzugt als innerhalb der Ankermittel ausgebildete Bohrung realisiert. Zusätzlich oder alternativ ist ein Verbindungskanal am Au-ßenumfang der Ankermittel realisierbar, der bevorzugt radial außen unmittelbar vom Spulenträger begrenzt ist. Als besonders zweckmäßig hat es sich herausgestellt, den Ankermitteln jeweils einen der zugehörigen Entlüftungsbohrung zugeordneter Entlüftungsventilsitz zum Verschließen der jeweiligen Entlüftungsbohrung, bevorzugt durch Bestromen der Spulenmittel zugeordnet ist. Bevorzugt wirken die Ankermittel mit einem in diesem gehaltenen, stirnseitigen Dichtelement, insbesondere ein Elastomerelement mit dem kernseitigen Entlüftungsventilsitz zusammen. Unabhängig von der konkreten Ausgestaltung der Paarung Ankermittel/Entlüftungsventilsitz ist es bevorzugt, wenn die Ankermittel entgegen der Federkraft einer Rückstellfeder bei Bestromen der Spulenmittel verstellbar sind, wobei es ganz besonders bevorzugt ist, wenn die Federmittel die Ankermittel von dem Entlüftungsventilsitz weg federkraftbeaufschlagen, so dass der bevorzugt von den Ankermitteln und dem Kern begrenzte Arbeitsraum, der bevorzugt über einen ankerseitigen Verbindungskanal mit dem Anschlussbereich luftleitend verbunden und bei Nicht-Bestromung entlüftet ist.

Die Ankermittel wirken bevorzugt unmittelbar, insbesondere über daran festgelegte, noch weiter bevorzugt elastomere Dichtmittel mit einem Arbeitsventilsitz zusammen, der bevorzugt auf einer von dem jeweiligen Entlüftungsventilsitz abgewandten Seite, d.h. im Bereich der Anschlussgehäuseseite angeordnet ist. Weiter bevorzugt befinden sich die Arbeitsventilsitze nicht in dem monolithischen Kunststoffgehäusekörper, sondern innerhalb einer über die Pneumatikanschlüsse mit dem Gehäuse verbundenen Verteilerplatte. In der Verteilerplatte verläuft bevorzugt mindestens eine Druckversorgungsleitung, insbesondere eine gemeinsame Druckversorgungsleitung für sämtliche Ventilaktuatoren, wobei die Ventilaktuatoren durch unmittelbare oder mittelbare Wechselwirkung der Ankermittel mit dem Arbeitsventilsitz eine Öffnung zwischen der mindestens einen Druckversorgungsleitung und einer, insbesondere jeweiligen Arbeitsleitung öffnen oder schließen. Bevorzugt ist eine vorerwähnte, vorzugsweise vorgesehene Rückstellfeder derart angeordnet, dass diese Verbindung bei Nicht-Bestromung der Spulenmittel automatisch geschlossen wird oder bleibt.

Die Erfindung führt auch auf ein Verfahren zum Herstellen einer nach dem Konzept der Erfindung ausgebildeten Mehrventilanordnung. Als Bestandteil des Verfahrens werden mehrere Spulenmittel mit jeweils einem darin angeordneten Kern bereitgestellt, wobei jeder Kern eine Entlüftungsbohrung aufweist. Erfindungsgemäß werden die Entlüftungsbohrungen der Kerne jeweils luftleitend mit einem, insbesondere separaten, weiter bevorzugt als Kunststoffspritzgussteil ausgebildeten, Entlüftungskanalelement verbunden. Die Entlüftungskanalelemente bilden bei der fertigen Mehrventilvorrichtung den Entlüftungssammelkanal. Die Verbindung der Entlüftungskanalelemente zu dem Entlüftungskanal kann nach der Verbindung der Entlüftungskanalelemente mit den Entlüftungsbohrungen realisiert werden oder bevorzugt vorher, wobei es möglich ist, bereits zuvor zu einem Entlüftungssammelkanal verbundene Entlüftungskanalelemente bereitzustellen, d.h. Entlüftungskanalelemente, die bereits zu dem Entlüftungssammelkanal verbunden wurden, um dann als vormontierter Entlüftungssammelkanal mit den Entlüftungsbohrungen verbunden zu werden.

Bevorzugt werden die Entlüftungskanalelemente zum Ausbilden des Entlüftungssammelkanals ineinander gesteckt und/oder miteinander verrastet. Die Verbindung zu den Entlüftungsbohrungen erfolgt bevorzugt durch Ein- oder Aufstecken in entsprechende Kernöffnungen oder auf entsprechende Kernvorsprünge.

Wie im Zusammenhang mit der Mehrventilanordnung offenbart, ist es bevorzugt, wenn die Entlüftungssammelkanalelemente, vorzugsweise zusammen mit den Spulenmitteln und den darum angeordneten Jochelementen umspritzt werden. Dabei ist es möglich, die Entlüftungsbohrungen mit den einzelnen Entlüftungskanalelementen oder alternativ den bereits zu einem Sammelkanal zusammengesetzten Entlüftungskanalelementen vor der Einführung in ein Kunststoffspritzgussteilwerkzeug zu verbinden oder alternativ innerhalb dieses Werkzeugs.

Jedenfalls erfolgt die Umspritzung der Entlüftungskanalelemente, bevorzugt zusammen mit den Spulenelementen in einem entsprechenden Kunststoffspritzgusswerkzeug, wobei bevorzugt zur Herstellung des Gehäuses ein einziger Umspritzungsvorgang angewendet wird zur Herstellung eines einzigen monolithischen, das Gehäuse ausbildenden Gehäusekörpers.

Weitere Vorteile, Merkmale und Einzelheiten der Erfindung ergeben sich aus der nachfolgenden Beschreibung bevorzugter Ausführungsbeispiele sowie anhand der Figuren.

Diese zeigen in:
- Fig.1a bis Fig. 1h: unterschiedliche Fertigungsstufen zur Herstellung einer in Fig. 1h im Schnitt gezeigten Mehrventilvorrichtung,
- Fig. 2a bis Fig. 2d: ein alternatives Ausführungsbeispiel einer nach dem Konzept der Erfindung ausgebildeten Mehrventilanordnung in unterschiedlichen, teilweise geschnittenen Ansichten, und
- Fig. 3a bis Fig. 3d: ein Ausführungsbeispiel gemäß den Fig. 1a bis 1h entsprechende Mehrventilvorrichtung in unterschiedlichen, teilweise geschnittenen Ansichten.

In den Figuren sind gleiche Elemente und Elemente mit der gleichen Funktion mit den gleichen Bezugszeichen gekennzeichnet.

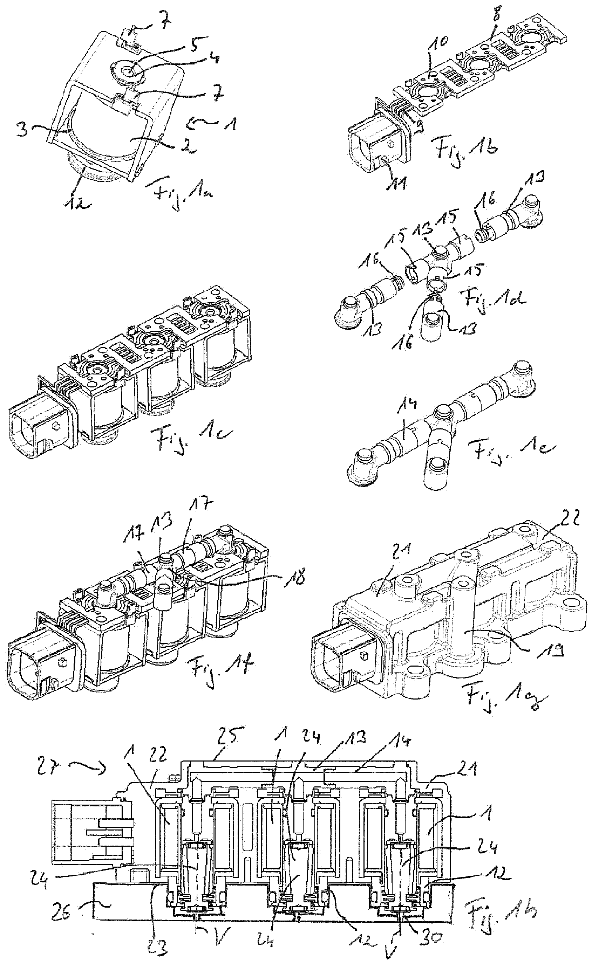

In den Figuren 1a bis 1f sind unterschiedliche Montageschritte und Komponenten zur Herstellung eines in Fig. 1g in einer perspektivischen Ansicht dargestellten, erfindungsgemäßen Mehrventilvorrichtung gezeigt, die wiederum in Fig. 1h in einer Schnittansicht dargestellt ist.

In Fig. 1a ist ein vormontierter elektromagnetischer Ventilaktuator 1 gezeigt, von welchem in der in Fig. 1g und 1h dargestellten fertigen Mehrventilvorrichtung (Ventilblock) mehrere - hier beispielhaft drei Stück - vorgesehen sind. Der elektromagnetische Ventilaktuator 1 umfasst bestrombare Spulenmittel 2 (elektrische Wicklung), die auf einem als Kunststoffspritzgussteil ausgebildeten Spulenträger 3 angeordnet ist. In einer zentralen Durchgangsöffnung (Zentralbohrung) des Spulenträgers 3 befindet sich ein Kern 4 zum elektromagnetischen Zusammenwirken mit nicht gezeigten Ankermitteln. In den Kern 4 ist eine zentrale Entlüftungsbohrung 5 vorgesehen. Die Spulenmittel 3 sind umklammert von einem magnetisch leitenden Joch 6 zum Schließen des Magnetkreises. Zu erkennen sind elektrische Kontaktelemente 7 zur Bestromung bzw. elektrischen Kontaktierung der Spulenmittel 2. In Fig. 1a in der Zeichnungsebene unten ist ein Pneumatikanschluss 12 zur pneumatischen Kontaktierung des Ventilaktuators 1 gezeigt.

Im Rahmen des Herstellungsverfahrens werden mehrere solcher Ventilaktuatoren, hier beispielhaft drei, bereitgestellt. In Fig. 1b ist eine Anschlussplatte 8 zur elektrischen Kontaktierung der Kontakte 7 mehrerer Ventilaktuatoren 1 gezeigt. Die Anschlussplatte 8 besteht aus Leitungsflächen 9 sowie Anflanschabschnitten 10 zum Festlegen mehrerer, hier drei, Ventilaktuatoren 1. Die Anschlussplatte 8 umfasst elektrische Anschlussmittel 11, hier in Form einer Kontaktbuchse.

Fig. 1c zeigt den nächsten Montage- bzw. Herstellungsschritt. Zu erkennen ist, dass die mehreren Ventilaktuatoren 1 an der Anschlussplatte 8 angeordnet sind, die sich senkrecht zu den später noch zu erläuternden Verstellachsen der Ankermittel erstreckt. In Fig. 1d sind mehrere jeweils als Kunststoffspritzgussteil ausgebildete Entlüftungskanalelemente 13 gezeigt, die zu einem in Fig. 1e gezeigten Entlüftungssammelkanal 14 zusammengesetzt werden, vorliegend durch Ineinanderstecken. Hierzu weist zumindest eines der Entlüftungskanalelemente, hier das in der Zeichnung mittlere, als Verteilerelement ausgebildete Entlüftungskanalelement endseitige Steckmuffenabschnitte 15 zur Aufnahme jeweils eines Einsteckabschnittes 16 eines anderen der Entlüftungskanalelemente 13 auf. Über diese Einsteckverbindung werden die Entlüftungskanalelemente luftleitend zu dem Entlüftungskanalelement 14 verbunden. Im Rahmen des Verfahrens ist es möglich, diesen Zwischenmontageschritt zur Erstellung des Entlüftungskanalelementes vorgelagert auszuführen und dann den fertigen bzw. vormontierten Entlüftungskanal 14 bereitzustellen. Dieser wird gemäß Fig. 1f verbunden mit den Entlüftungsbohrungen 5 der Kerne, hier durch Einstecken in eine stirnseitige Einstecköffnung jedes Kerns. Zu erkennen ist, dass das hier beispielhaft mittlere Entlüftungskanalelement 13 gemäß Fig. 1f als Verteilerelement ausgebildet ist und zwei Verbindungskanalabschnitte 17 zum Verbinden mit den benachbarten Entlüftungskanalelementen aufweist, sowie einen Ableitungskanalabschnitt 18 zum Anbinden an einen zu einem Gehäuseentlüftungskanal 19 (siehe Fig. 1g) sowie einen in der Zeichnung nach unten weisenden Anschlusskanalabschnitt 20 zur Anbindung an den zugehörigen Kern. Die Entlüftungskanalabschnitte links und recht dieses Verteilerelementes sind im Wesentlichen L-förmig ausgebildet und weisen lediglich einen Anschlusskanalabschnitt sowie einen Verbindungskanalabschnitt auf.

Die Vormontageanordnung gemäß Fig. 1f wird umspritzt mit Kunststoffspritzgussmaterial zur Herstellung des in Fig. 1g gezeigten Gehäuses 21, welches vorliegend aus einem durch den Umspritzungsvorgang hergestellten monolithischen Gehäusekörper 22 besteht, in dem die Funktionseinheiten ausgebildet sind und aus den seitlich elektrische Anschlussmittel 11 herausragen. Wie aus der Schnittansicht gemäß Fig. 1h zu erkennen ist, umfasst das Gehäuse 21 bzw. der Gehäusekörper eine Anschlussgehäuseseite 23, aus der die pneumatischen Anschlüsse 12 der einzelnen Ventilaktuatoren 1 herausragen und eine davon über Verstellachsen von Ankermitteln 24 beabstandete Rückseite 25, an der das Kunststoffspritzgussmaterial bzw. der Gehäusekörper die Entlüftungskanalelemente 13 zumindest größtenteils verdeckt. An der Anschlussgehäuseseite 23 ist eine Verteilerplatte zur pneumatischen Kontaktierung der Pneumatikanschlüsse 12 am Gehäuse 21 festgelegt bzw. angeordnet.

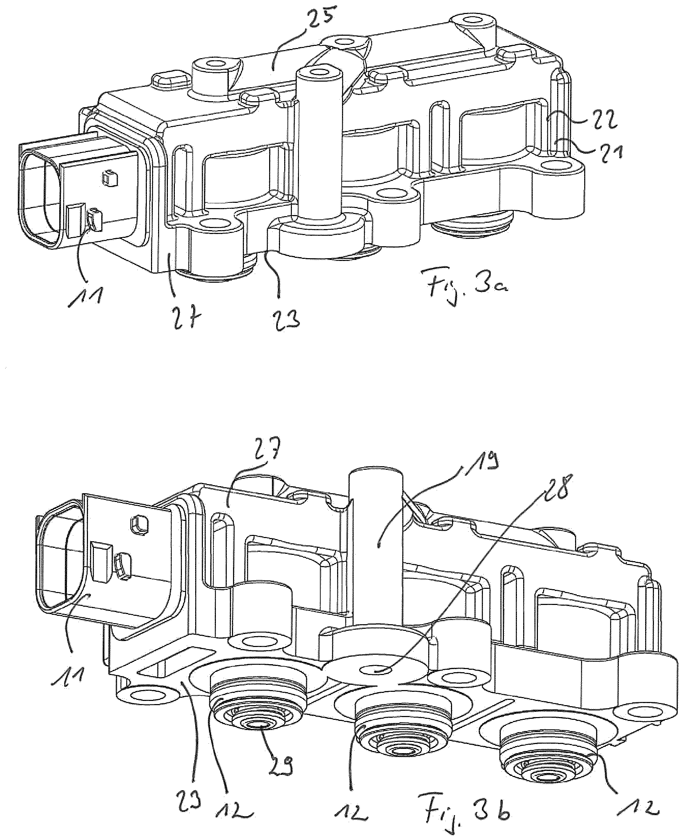

Der Detailaufbau der Mehrventilvorrichtung 27 gemäß Fig. 1h wird im Folgenden anhand der Fig. 3a bis 3d erläutert, wobei zur Vermeidung von Wiederholungen auch auf die vorhergehende Figurenbeschreibung verwiesen wird, die insoweit Anwendung findet.

In den Fig. 3a und 3b ist die hier als Dreier-Ventilanordnung ausgebildete Mehrventilvorrichtung 27 in unterschiedlichen perspektivischen Ansichten gezeigt.

Zu erkennen ist der monolithische Gehäusekörper 22 der das Gehäuse 21 ausbildet, welches die Gehäuserückseite 25 und gegenüberliegend bzw. davon abgewandt die Anschlussgehäuseseite 23 mit ihren Anschlüssen 12 aufweist. Zu erkennen ist in den Fig. 3a und 3b der durch den erwähnten Umspritzungsvorgang hergestellte Entlüftungskanal 19, welcher sich parallel erstreckt zu den später noch zu erläuternden Verstellachsen der Ankermittel und der zu einer Entlüftungsöffnung 28 auf der Anschlussgehäuseseite 23 führt.

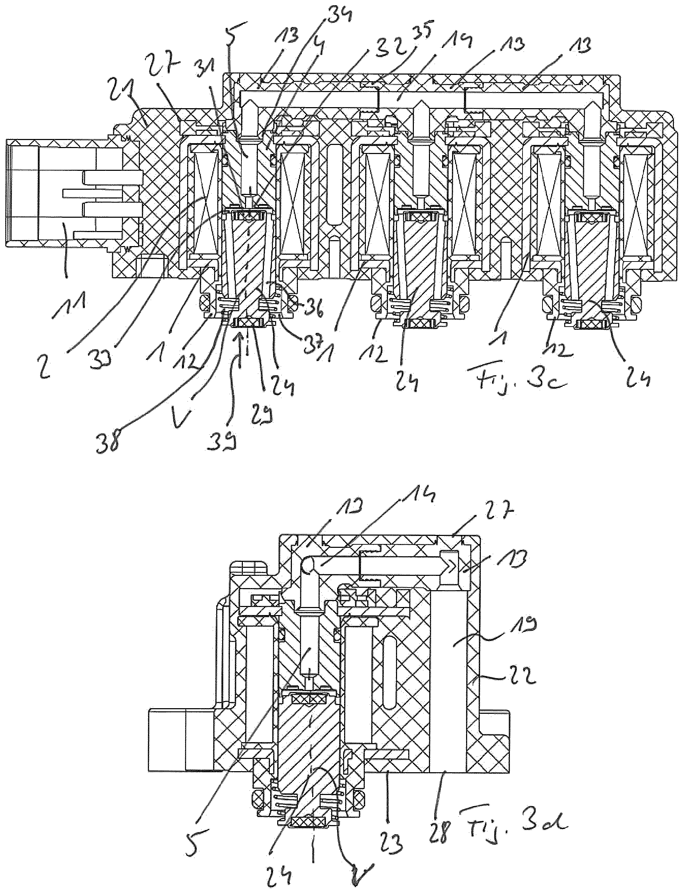

Aus den Fig. 3c und 3d wird der innere Aufbau der Mehrventilanordnung 27 deutlich. Zunächst sind die mehreren, nebeneinander angeordneten Ventilaktuatoren 1 zu erkennen, jeweils umfassend axial entlang einer jeweiligen Verstellachse V verstellbare Ankermittel 24, die über ein in der Zeichnungsebene unteres, an den Ankermitteln 24 gehaltenes, bevorzugt elastomeres Dichtelement 29 im Bereich des jeweiligen Pneumatikanschlusses 12 mit einem jeweiligen Ventilsitz 30 (vgl. Fig. 1h), der Verteilerplatte 26 (vgl. ebenfalls Fig. 1h) in einem Bereich außerhalb des Gehäuses 21 zusammenwirken.

Gegenüberliegend entlang der Verstellachse V bzw. von dem Dichtelement 29 abgewandt, tragen die Ankermittel jeweils ein weiteres elastomeres Dichtelement 31 zum Zusammenwirken mit einem jeweiligen Entlüftungsventilsitz 32 am Kern 4. Durch Anlage des in der Zeichnungsebene oberen Dichtelementes am Entlüftungsventilsitz 32 kann die Entlüftungsbohrung 5 im Kern 4 geschlossen werden. Bei von dem Entlüftungsventilsitz 32 wegverstellten Ankermitteln ist ein axial zwischen den Ankermitteln 24 und dem Kern gebildeter Arbeitsraum 33 luftleitend über die Entlüftungsbohrung 5 mit dem Entlüftungssammelkanal 14 verbunden, welcher wiederum gebildet ist von den Entlüftungskanalelementen 13.

Diese sind in entsprechende Vertiefungen 34 in den Kernen 4 eingesetzt und untereinander in einem jeweiligen Verbindungsbereich 35 durch Einstecken luftleitend und mechanisch miteinander verbunden.

In den Ankermitteln sind sich entlang der jeweiligen Verstellachse V erstreckende, hier beispielhaft leicht schräg ausgebildete Verbindungskanäle 36 als Durchgangsöffnungen bzw. Bohrungen ausgebildet, die den jeweiligen Pneumatikanschluss 12, genauer eine dort vorgesehene Arbeitsleitung 37 luftleitend mit dem Arbeitsraum 33 verbinden.

Eine Rückstellfeder 38, entgegen derer Federkraft die Ankermittel 14 bei Bestromung, d.h. hier in der Zeichnungsebene nach oben verstellbar sind, drückt die Ankermittel 24 in der Zeichnungsebene nach unten gegen den in Fig. 13 nicht gezeigten (unteren Ventilsitz) der zum Verschließen einer über den Pfeil 39 angedeuteten Druckluftleitung (Versorgungsleitung) dient. Sind die Spulemittel 2 nicht bestromt, drückt die Rückstellfeder 38 die Ankermittel 24 gegen den unteren Ventilsitz, so dass die luftleitende Verbindung zwischen der Versorgungsleitung und der Arbeitsleitung unterbrochen ist. Gleichzeitig ist die Arbeitsleitung über die Verbindungskanäle 36, den Arbeitsraum 13 und die Entlüftungsbohrung 5 entlüftet. Bei Bestromung der Spulenmittel werden die Ankermittel 24 von dem unteren Ventilsitz weg gegen den Entlüftungsventilsitz 32 verstellt, wodurch die Entlüftung unterbrochen bzw. die Entlüftungsbohrung 5 geschlossen wird.

Aus einer Zusammenschau der Fig. 3c und 3d ist zu erkennen, dass der monolithische Gehäusekörper 22 sowohl die Entlüftungskanalelemente 13 umschließt und sich zudem auch in Bereiche zwischen den Ventilaktuatoren 1 erstreckt. In den Gehäusekörper 22 ist der Entlüftungskanal 19 ausgebildet, an den der Entlüftungssammelkanal 14 angeschlossen ist. Die Entlüftungsöffnung 28 befindet sich auf der Anschlussgehäuseseite 23.

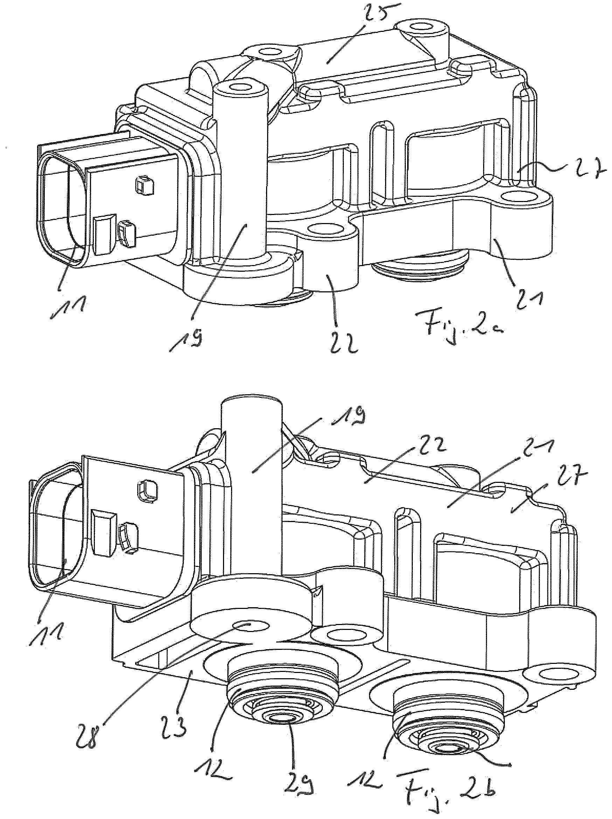

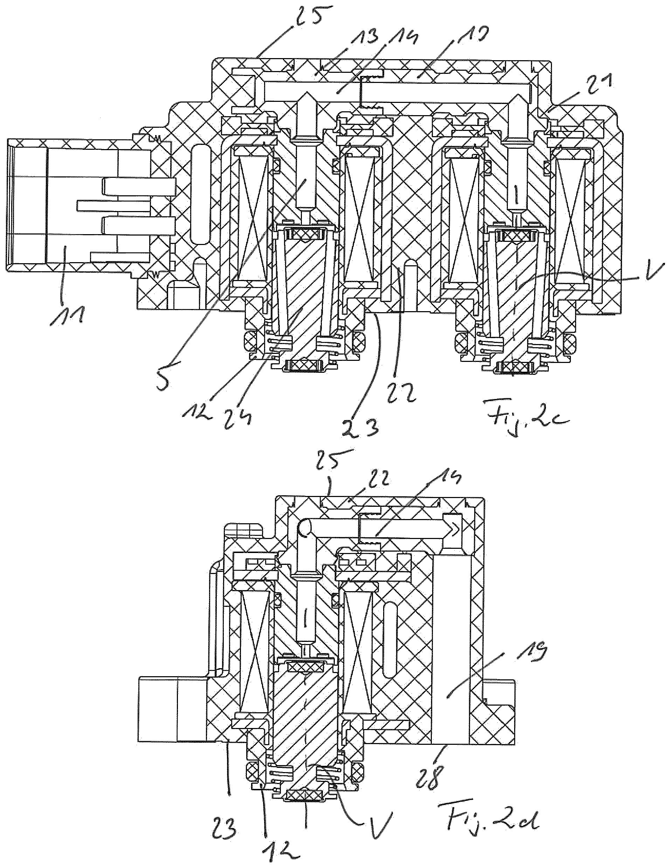

Grundsätzlich funktionell den gleichen Aufbau weist die Mehrventilanordnung 27 gemäß den Fig. 2a bis 2d auf, wobei hier anstatt drei Ventilaktuatoren lediglich ausschließlich zwei Ventilaktuatoren nebeneinander angeordnet sind. Zur Vermeidung von Wiederholungen wird hinsichtlich der überwiegenden Gemeinsamkeiten auf die vorhergehende Figurenbeschreibung verwiesen.

### Bezugszeichenliste

- 1: elektromagnetischer Ventilaktuator
- 2: Spulenmittel
- 3: Spulenträger
- 4: Kerne
- 5: Entlüftungsbohrungen
- 6: Joche
- 7: elektrische Kontakte
- 8: Anschlussplatte
- 9: Leitungsflächen
- 10: Anflanschabschnitte
- 11: elektrische Anschlussmittel
- 12: Pneumatikanschlüsse
- 13: Entlüftungskanalelemente
- 14: Entlüftungssammelkanal
- 15: Steckmuffenabschnitte
- 16: Einsteckabschnitte
- 17: Verbindungskanalabschnitte
- 18: Ableitungsabschnitt
- 19: Entlüftungskanal
- 20: Anschlusskanalabschnitt
- 21: Gehäuse
- 22: Gehäusekörper
- 23: Anschlussgehäuseseite
- 24: Ankermittel
- 25: Gehäuserückseite
- 26: pneumatische Verteilerplatte
- 27: Mehrventilvorrichtung
- 28: Entlüftungsöffnung
- 29: Dichtelement
- 30: (Arbeits-) Ventilsitz
- 31: Dichtelement
- 32: Entlüftungsventilsitz
- 33: Arbeitsraum (Arbeitskammer)
- 34: Vertiefungen in den Kernen
- 35: Verbindungsbereich
- 36: Verbindungskanäle
- 37: Arbeitsleitung
- 38: Rückstellfeder
- 39: Pfeil (symbolisiert durch die Pneumatikversorgungsleitung)

- V: Verstellachse

## Patentansprüche

1. Pneumatische Mehrventilvorrichtung, (Ventilblock) umfassend ein Gehäuse (21) mit mehreren elektromagnetischen Ventilaktuatoren (1), jeweils aufweisend stationär in dem Gehäuse (21) angeordnete Spulenmittel (2), einen in dem Gehäuse (21) angeordneten Kern (4) sowie als Reaktion auf eine Bestromung der Spulenmittel (2) in dem Gehäuse (21) relativ zu dem Kern (4) und einem Pneumatikanschluss(12) des Gehäuses (21) entlang einer Verstellachse (V) verstellbare Ankermittel (24), wobei die Verstellachsen (V) der Ankermittel (24) der Ventilaktuatoren (1) parallel ausgerichtet sind und die den Ankermitteln (24) zugeordneten Pneumatikanschlüsse (12) nebeneinander an einer Anschlussgehäuseseite (23) angeordnet sind, die entlang der Verstellachsen (V) von einer davon abgewandten Gehäuserückseite (25) beabstandet ist, wobei die Kerne (4) jeweils eine Entlüftungsbohrung (5) aufweisen, die luftleitend mit einem Entlüftungssammelkanal (14) auf der von der Anschlussgehäuseseite (23) abgewandten Seite der Kerne (4) verbunden sind, der luftleitend mit einer Entlüftungsöffnung (28) des Gehäuses (21) verbunden ist, die auf einer von der Gehäuserückseite (25) unterschiedlichen Gehäuseseite, insbesondere auf der die Pneumatikanschlüsse (12) aufweisenden Anschlussgehäuseseite (23), angeordnet ist,
**dadurch gekennzeichnet,**
**dass** der Entlüftungssammelkanal (14) von mehreren luftleitend miteinander verbundenen, bevorzugt jeweils als Kunststoffspritzgussteil ausgebildeten, Entlüftungskanalelementen (13) gebildet ist.

2. Mehrventilvorrichtung nach Anspruch 1,
**dadurch gekennzeichnet,**
**dass** das Gehäuse (21) einen, bevorzugt monolithischen, Gehäusekörper (22) aufweist, vorzugsweise daraus besteht, der durch Umspritzen der Entlüftungskanalelemente (13), bevorzugt gemeinsam mit den Spulenmitteln (2), mit Kunststoff gebildet ist.

3. Mehrventilvorrichtung nach Anspruch 2,
**dadurch gekennzeichnet,**
**dass** in dem Gehäusekörper (22) ein, sich vorzugsweise parallel zu den Verstellachsen (V) erstreckender, Entlüftungskanal ausgebildet ist, der den Entlüftungssammelkanal (14) mit der, vorzugsweise von einem Entlüftungskanalende des Entlüftungskanals (19) gebildeten, Entlüftungsöffnung (28) verbindet.

4. Mehrventilvorrichtung nach einem der vorhergehenden Ansprüche,
**dadurch gekennzeichnet,**
**dass** die Entlüftungskanalelement (13) bevorzugt durch lneinanderstecken und/oder Verrasten miteinander mechanisch, bevorzugt formschlüssig, verbunden sind und/oder dass die Entlüftungskanalelemente (13), bevorzugt durch Ein- oder Aufstecken in die bzw. auf die Kerne (4), mechanisch mit den Kernen (4) verbunden sind.

5. Mehrventilvorrichtung nach einem der vorhergehenden Ansprüche,
**dadurch gekennzeichnet,**
**dass** eines der Entlüftungskanalelemente (13) als Verzweigungselement ausgebildet ist, welches einen Anschlusskanalabschnitt (20) zum Anschließen an einen der Kerne (4), mindestens einen Verbindungskanalabschnitt (17) zur Anbindung an ein anderes der zu einem anderen der Kerne (4) führenden Entlüftungskanalelemente (13) sowie einen Ableitungskanalabschnitt zur luftleitenden Verbindung mit der Entlüftungsöffnung (28), insbesondere über den Entlüftungskanal (19), aufweist.

6. Mehrventilvorrichtung nach einem der vorhergehenden Ansprüche,
**dadurch gekennzeichnet,**
**dass** die Entlüftungskanalelemente (13) eine gemeinsame elektrische Anschlussplatte (8) zur elektrischen Kontaktierung der mehreren Spulenmittel (2), bevorzugt axial in Verlängerung der Verstellachsen (V), durchsetzen.

7. Mehrventilvorrichtung nach einem der vorhergehenden Ansprüche,
**dadurch gekennzeichnet,**
**dass** die Ankermittel (24) jeweils unmittelbar in einem der, bevorzugt als Kunststoffteil ausgebildeten, Spulenträger (3) der zugehörigen Spulenmittel (2) längsverstellbar geführt sind, ohne Zwischenanordnung eines Ankerführungsrohres.

8. Mehrventilvorrichtung nach einem der vorhergehenden Ansprüche,
**dadurch gekennzeichnet,**
**dass** die, bevorzugt zentrisch in den Kernen (4) angeordneten, Entlüftungsbohrungen (5) axial geradlinig verlaufen und/oder untereinander parallel sind und/oder dass von jedem Ankermittel (24) und dem zugehörigen Kern (4) eine jeweilige Arbeitskammer (33) begrenzt ist, die über die zugehörige Entlüftungsbohrung (5) entlüftbar ist.

9. Mehrventilvorrichtung nach einem der vorhergehenden Ansprüche,
**dadurch gekennzeichnet,**
**dass** die Entlüftungsbohrungen (5) über einen jeweiligen, insbesondere in die jeweilige Arbeitskammer (33) mündenden, bevorzugt mindestens eine Bohrung in den jeweiligen Ankermitteln (24) umfassenden und/oder am Außenumfang der Ankermittel (24) ausgebildeten Verbindungskanal (36) mit dem Pneumatikanschluss (12) und/oder einer Arbeitsleitung (37) verbunden sind.

10. Mehrventilvorrichtung nach einem der vorhergehenden Ansprüche,
**dadurch gekennzeichnet,**
**dass** den Ankermitteln (24) jeweils ein der zugehörigen Entlüftungsbohrung (5) zugeordneter Entlüftungsventilsitz (32) zum Verschließen der jeweiligen Entlüftungsbohrung (5), bevorzugt durch Bestromen der Spulenmittel (2), zugeordnet ist.

11. Mehrventilvorrichtung nach einem der vorhergehenden Ansprüche,
**dadurch gekennzeichnet,**
**dass** den Ankermitteln (24) jeweils ein im Bereich des Pneumatikanschlusses (12) zugeordneter Arbeitsventilsitz (30) zum Öffnen und Schließen einer luftleitenden Verbindung zwischen einer Druckversorgungsleitung und einer Arbeitsleitung.

12. Mehrventilvorrichtung nach einem der vorhergehenden Ansprüche,
**dadurch gekennzeichnet,**
**dass** das Gehäuse (21) über die Pneumatikanschlüsse (12) mit einer Verteilerplatte (26) verbunden ist, bevorzugt aufweisend Arbeitsventilsitze (30) zum Zusammmenwirken mit den Ankermitteln (24), mindestens eine Druckversorgungsleitung und mindestens eine Arbeitsleitung.

13. Verfahren zum Herstellen einer Mehrventilvorrichtung (27) nach einem der vorhergehenden Ansprüche, wobei mehrere Spulenmittel (2) mit jeweils einem darin angeordneten eine Entlüftungsbohrung (5) aufweisenden Kern (4) bereitgestellt werden,
**dadurch gekennzeichnet,**
**dass** die Entlüftungsbohrungen (5) der Kerne (4) jeweils luftleitend mit einem, bevorzugt als Kunststoffspritzgussteil ausgebildeten, Entlüftungskanalelement (13) verbunden werden, die vor oder nach dem luftleitenden Verbinden mit den Entlüftungsbohrungen (5) luftleitend zu einem Entlüftungssammelkanal (14) verbunden wurden bzw. werden.

14. Verfahren nach Anspruch 13,
**dadurch gekennzeichnet,**
**dass** die Entlüftungskanalelemente (13) zum Ausbilden des Entlüftungssammelkanals (14) ineinander gesteckt und/oder miteinander verrastet werden und/oder durch Ein- oder Aufstecken in die Kerne (4) mit diesen mechanisch verbunden werden.

15. Verfahren nach einem der Ansprüche 13 oder 14,
**dadurch gekennzeichnet,**
**dass** die Entlüftungskanalelemente (13), bevorzugt zusammen mit den Spulenmitteln (2), zur Ausbildung eines monolithischen Gehäusekörpers (22) umspritzt werden.

## Claims

1. A pneumatic multi-valve device, (valve block), comprising a housing (21), which has a plurality of electromagnetic valve actuators (1), each having coil elements (2) arranged in the housing (21) in a stationary manner, a core (4) arranged in the housing (21), and armature elements (24), which can be displaced along a displacement axis (V) in the housing (21) relative to the core (4) and to a pneumatic connection (12) of the housing (21) as a response to an energization of the coil elements (2), the displacement axes (V) of the armature elements (24) of the valve actuators (1) being oriented parallel and the pneumatic connections (12) associated with the armature elements (24) being arranged adjacent to each other on a connection housing side (23), which is spaced apart from a housing back side (25) facing away therefrom along the displacement axes (V), the cores (4) each having a venting bore (5), which is connected in an air-conducting manner to a venting collection channel (14) on the side of the cores (4) facing away from the connection housing side (23), which venting collection channel is connected in an air-conducting manner to a venting opening (28) of the housing (21), which venting opening is arranged on a housing side different from the housing back side (25), in particular on the connection housing side (23) having the pneumatic connections (12),
**characterized in that**
the venting collection channel (14) is formed by a plurality of venting channel elements (13), which are connected to each other in an air-conducting manner and which are preferably each embodied as a plastic injection molded part.

2. The multi-valve device according to claim 1,
**characterized in that**
the housing (21) has a, preferably monolithic, housing body (22), preferably consists thereof, which is formed by overmolding the venting channel elements (13), preferably together with the coil elements (2), with plastic.

3. The multi-valve device according to claim 2,
**characterized in that**
a venting channel, which preferably extends parallel to the displacement axes (V) and which connects the venting collection channel (14) to the venting opening (28), which is preferably formed by a venting channel end of the venting channel (19), is embodied in the housing body (22).

4. The multi-valve device according to any one of the preceding claims,
**characterized in that**
the venting channel elements (13) are mechanically connected to each other, preferably in a positive manner, preferably by inserting into each other and/or interlocking with each other, and/or that the venting channel elements (13) are mechanically connected to the cores (4), preferably by means of inserting or attaching into the or onto the cores (4), respectively.

5. The multi-valve device according to any one of the preceding claims,
**characterized in that**
one of the venting channel elements (13) is embodied as a branching element, which has a connection channel section (20) for connection to one of the cores (4), at least one connection channel section (17) for linking to another one of the venting channel elements (13) leading to another one of the cores (4), as well as a deflection channel section for the air-conducting connection to the venting opening (28), in particular via the venting channel (19).

6. The multi-valve device according to any one of the preceding claims,
**characterized in that**
the venting channel elements (13) permeate a joint electrical connection plate (8) for electrically contacting the plurality of coil elements (2), preferably axially in extension of the displacement axes (V).

7. The multi-valve device according to any one of the preceding claims,
**characterized in that**
the armature elements (24) are each guided directly in one of the coil carriers (3), which are preferably embodied as plastic part, of the associated coil elements (2) in a longitudinally displaceable manner, without interpositioning an armature guide tube.

8. The multi-valve device according to any one of the preceding claims,
**characterized in that**
the venting bores (5), which are preferably centrically arranged in the cores (4), run axially in a straight line and/or are parallel among each other and/or that a respective working chamber (33), which can be vented via the associated venting bore (5), is bounded by each armature element (24) and the associated core (4).

9. The multi-valve device according to any one of the preceding claims,
**characterized in that**
the venting bores (5) are connected to the pneumatic connection (12) and/or a working line (37) via a respective connection channel (36), which in particular leads into the respective working chamber (33) and which preferably comprises at least one bore in the respective armature elements (24) and/or is embodied on the outer circumference of the armature elements (24).

10. The multi-valve device according to any one of the preceding claims,
**characterized in that**
a venting valve seat (32), which is associated with the corresponding venting bore (5), is in each case associated with the armature elements (24) for closing the respective venting bore (5), preferably by energizing the coil elements (2).

11. The multi-valve device according to any one of the preceding claims,
**characterized in that**
a working valve seat (30) is in each case associated with the armature elements (24) in the area of the pneumatic connection (12) for opening and closing an air-conducting connection between a pressure supply line and a working line.

12. The multi-valve device according to any one of the preceding claims,
**characterized in that**
the housing (21) is connected via the pneumatic connections (12) to a distributor plate (26), preferably having working valve seats (30) for interacting with the armature elements (24), at least one pressure supply line and at least one working line.

13. A method for producing a multi-valve device (27) according to any one of the preceding claims, a plurality of coil elements (2) each comprising a core (4) arranged therein and having a venting bore (5) being provided,
**characterized in that**
the venting bores (5) of the cores (4) are each connected in an air-conducting manner to a venting channel element (13), which is preferably embodied as a plastic injection molded part, which had been or are connected, respectively, in an air-conducting manner to a venting collection channel (14) prior to or after the connection to the venting bores (5) in an air-conducting manner.

14. The method according to claim 13,
**characterized in that**,
to embody the venting collection channel (14), the venting channel elements (13) are inserted into each other and/or are interlocked with each other, and/or are mechanically connected to the cores (4), by means of inserting or attaching into the latter.

15. The method according to claim 13 or 14,
**characterized in that**
the venting channel elements (13) are overmolded, preferably together with the coil elements (2), to embody a monolithic housing body (22).

## Revendications

1. Dispositif de multisoupape pneumatique, (bloc de soupapes) comprenant un boîtier (21) ayant plusieurs actionneurs de soupape (1) électromagnétiques, chaque actionneur de soupape (1) ayant des moyens de bobine (2) stationnaires disposés dans le boîtier (21), un noyau (4) disposé dans le boîtier (21) et des moyens d'armature (24) déplaçables le long d'un axe de déplacement (V) dans le boîtier (21) par rapport au noyau (4) et à un raccordement pneumatique (12) du boîtier (21) en réponse à une alimentation en courant des moyens de bobine (2), les axes de déplacement (V) des moyens d'armature (24) des actionneurs de soupape (1) étant orientés parallèlement l'un à l'autre et les raccordements pneumatiques (12) assignés aux moyens d'armature (24) étant disposés l'un à côté de l'autre sur un côté de boîtier de raccordement (23) qui est espacé d'un côté arrière de boîtier (25) détourné le long des axes de déplacement (V), chaque noyau (4) ayant un trou de ventilation (5) qui est raccordé, de manière conductrice d'air, à un conduit collecteur de ventilation (14) sur le côté des noyaux (4) qui est détourné du côté de boîtier de raccordement (23), ledit conduit collecteur de ventilation (14) étant raccordé à un orifice de ventilation (28) du boîtier (21) de manière conductrice d'air, ledit orifice de ventilation (28) étant disposé sur un côté de boîtier qui est différent du côté arrière de boîtier (25), notamment sur le côté de boîtier de raccordement (23) qui a les raccordements pneumatiques (12)
**caractérisé en ce que**
le conduit collecteur de ventilation (14) est réalisé par plusieurs éléments de conduit de ventilation (13) qui sont raccordés l'un à l'autre de manière conductrice d'air, chaque élément de conduit de ventilation (13) étant, de préférence, réalisé comme pièce moulée par injection en matière plastique.

2. Dispositif de multisoupape selon la revendication 1,
**caractérisé en ce que**
le boîtier (21) a, de préférence est composé de, un corps de boîtier (22), de préférence monolithique, qui est réalisé par le surmoulage en matière plastique des éléments de conduit de ventilation (13), de préférence conjointement avec les moyens de bobine (2).

3. Dispositif de multisoupape selon la revendication 2,
**caractérisé en ce**
**qu'**un conduit de ventilation est réalisé dans le corps de boîtier (22), ledit conduit de ventilation s'étendant, de préférence, parallèlement aux axes de déplacement (V) et raccordant le conduit collecteur de ventilation (14) à l'orifice de ventilation (28), de préférence réalisé par une extrémité de conduit de ventilation du conduit de ventilation (19).

4. Dispositif de multisoupape selon l'une quelconque des revendications précédentes,
**caractérisé en ce que**
les éléments de conduit de ventilation (13) sont raccordés l'un à l'autre de manière mécanique, de préférence par liaison par forme, de préférence par insertion et/ou par verrouillage, et/ou que les éléments de conduit de ventilation (13) sont raccordés aux noyaux (4) de manière mécanique, de préférence par l'insertion dans ou par le montage sur les noyaux (4).

5. Dispositif de multisoupape selon l'une quelconque des revendications précédentes,
**caractérisé en ce**
**qu'**un des éléments de conduit de ventilation (13) est réalisé comme élément de branchement qui a une partie de conduit de raccordement (20) pour le raccordement à un des noyaux (4), au moins une partie de conduit de liaison (17) pour le rattachement à un autre élément de conduit de ventilation (13) qui mène à un autre noyau (4) et une partie de conduit d'évacuation pour le raccordement conducteur d'air à l'orifice de ventilation (28), notamment par le conduit de ventilation (19).

6. Dispositif de multisoupape selon l'une quelconque des revendications précédentes,
**caractérisé en ce que**
les éléments de conduit de ventilation (13) percent une plaque de raccordement (8) électrique commune pour contacter les plusieurs moyens de bobine (2) de manière électrique, de préférence dans le prolongement axial des axes de déplacement (V).

7. Dispositif de multisoupape selon l'une quelconque des revendications précédentes,
**caractérisé en ce que**
les moyens d'armature (24) sont guidés chacun de manière déplaçable dans le sens longitudinal directement dans un des supports de bobine (3) des moyens de bobine (2) correspondantes sans interposition d'un tuyau de guidage d'armature, les supports de bobine (3) étant réalisés de préférence comme pièce en matière plastique.

8. Dispositif de multisoupape selon l'une quelconque des revendications précédentes,
**caractérisé en ce que**
les trous de ventilation (5), de préférence disposés de manière centrée dans les noyaux (4), s'étendent linéairement dans le sens axial et/ou sont parallèles l'un à l'autre et/ou qu'une chambre de travail (33) respective est limitée par chaque moyen d'armature (24) et le noyau (4) correspondant, ladite chambre de travail (33) pouvant être ventilée par le trou de ventilation (5) correspondant.

9. Dispositif de multisoupape selon l'une quelconque des revendications précédentes,
**caractérisé en ce que**
les trous de ventilation (5) sont raccordés au raccordement pneumatique (12) et/ou à une conduite de travail (37) via un conduit de liaison (36) respectif qui débouche notamment sur la chambre de travail (33) respective et qui comprend, de préférence, au moins un trou dans les moyens d'armature (24) respectifs et/ou qui est réalisé à la circonférence extérieure des moyens d'armature (24).

10. Dispositif de multisoupape selon l'une quelconque des revendications précédentes,
**caractérisé en ce**
**qu'**un siège de soupape de ventilation (32), qui est assigné au trou de ventilation (5) correspondant, est assigné à chaque moyen d'armature (24) pour fermer le trou de ventilation (5) respectif, de préférence par l'alimentation en courant des moyens de bobine (2).

11. Dispositif de multisoupape selon l'une quelconque des revendications précédentes,
**caractérisé en ce**
**qu'**un siège de soupape de travail (30) pour ouvrir et fermer un raccordement en communication d'air entre une conduite d'alimentation en pression et une conduite de travail est assigné à chaque moyen d'armature (24) dans la zone du raccordement pneumatique (12).

12. Dispositif de multisoupape selon l'une quelconque des revendications précédentes,
**caractérisé en ce que**
le boîtier (21) est raccordé à une plaque de distribution (26) via les raccordements pneumatiques (12), ladite plaque de distribution (26) comprenant, de préférence, des sièges de soupape de travail (30) pour interagir avec les moyens d'armature (24), au moins une conduite d'alimentation en pression et au moins une conduite de travail.

13. Procédé de fabrication d'un dispositif de multisoupape (27) selon l'une quelconque des revendications précédentes, plusieurs moyens de bobine (2) qui ont un noyau (4) disposé dans chaque moyen de bobine (2) et comprenant un trou de ventilation (5) étant fournis,
**caractérisé en ce que**
les trous de ventilation (5) des noyaux (4) sont raccordés, de manière conductrice d'air, à un élément de conduit de ventilation (13), de préférence réalisé comme pièce moulée par injection en matière plastique, lesdits éléments de conduit de ventilation (13) étant raccordés de manière conductrice d'air afin de réaliser un conduit collecteur de ventilation (14) avant ou après le raccordement en communication d'air aux trous de ventilation (5).

14. Procédé selon la revendication 13,
**caractérisé en ce que**
les éléments de conduit de ventilation (13) sont insérés l'un dans l'autre et/ou verrouillés l'un avec l'autre et/ou sont raccordés de manière mécanique aux noyaux (4) par l'insertion dans ou le montage sur les noyaux (4) afin de réaliser le conduit collecteur de ventilation (14).

15. Procédé selon la revendication 13 ou la revendication 14,
**caractérisé en ce que**
les éléments de conduit de ventilation (13) sont surmoulés, de préférence conjointement avec les moyens de bobine (2), afin de réaliser un corps de boîtier (22) monolithique.
